# EUROPEAN PATENT SPECIFICATION

(11) **EP 4 448 245 B1**
(45) Date of publication and mention of the grant of the patent: **01.10.2025**
(21) Application number: 22851072.3
(22) Date of filing: 06.12.2022
(51) Int. Cl.: B29C 45/00, B29C 45/76, B29C 45/26

(54) **INJECTION MOLDING DEVICE AND METHOD**
SPRITZGIESSVORRICHTUNG UND VERFAHREN
DISPOSITIF ET MÉTHODE DE MOULAGE PAR INJECTION

(30) Priority: 13.12.2021 US 202163288922 P; 17.10.2022 US 202263416801 P
(43) Date of publication of application: 23.10.2024
(73) Proprietor: BARNES GROUP INC., Bristol, CT 06010 (US)
(72) Inventor: GALATI, Vito, Rowley, MA 01969 (US); KIENZLER, Fabian, Bristol, CT 06010 (US)
(74) Representative: Rentsch Partner AG
(86) International application number: PCT/US2022/051971
(87) International publication number: WO 2023/114049

(56) References cited:
- US-A- 4 425 790
- US-A- 4 624 132
- US-A1- 2008 134 765
- US-A1- 2011 254 183
- US-A1- 2018 231 445
- US-A1- 2018 254 198

## Description

### FIELD OF THE INVENTION

The disclosure relates to an injection molding device comprising at least one injection mold and a method for quality control of injection molded products, especially injection molded products comprising a constriction.

### BACKGROUND OF THE INVENTION

DE2358911A1 was first published in 1974 on behalf of Anstalt für Verbren-nungsmotoren Prof. Dr. List. It relates to a controller for injection moulding machines especially those where the screw is used for plasticising and injection. It comprises a pressure meter for reading the pressure in the mould and a control unit for regulating the injection pressure as a function of this. In addition to the pressure meter, one or more additional meters are used for measuring the flow front speed and/or the temperature in the mould. The injection pressure and/or speed, and in particular the advance speed of the screw during injection, are regulated as a function of these readings.

WOO2073328A1 **(**EP1373999B1) was first published in 2002 on behalf of Priamus System Technologies AG. It relates to method for controlling process parameters in order to obtain constant process conditions. In the operation of filling cavities in an injection mould, the actual profile of the parameter of a cavity being taken as reference and the actual profile of at least one further cavity being compared with it, so that optimum correspondence results in a 45 Degrees straight line or in the event of a lack of correspondence it is aimed to achieve a 45 Degrees straight line by changing the parameters of the further cavity.

WO07006496A1 was first published in 2007 on behalf of Priamus System Technologies AG. It relates to a method for monitoring and/or controlling the melt filling of at least one cavity of an injection molding machine. In particular by means of a cold channel tool. The invention also monitors the time which is required for the melt to reach the sensor in the cavity and modifies the viscosity of the melt in the event of variations and/or differentiations in said time.

WO009040077A1 was first published in 2009 on behalf of Priamus System Technologies AG. It relates to a method for monitoring, documenting and/or controlling an injection molding machine having an injection molding tool into which a melt is introduced. A viscosity of the melt in the injection mold is being ascertained by way of the respective quotients of shear stress and shear rate on the basis of pressure differences, the geometry of the cavity and the flow rate of the melt. The viscosity is ascertained by at least one mold internal pressure sensor and/or at least one mold wall temperature sensor. The pressure difference of the pressure ascertained by the mold internal pressure sensor at it when the melt arrives and at the mold wall temperature sensor when the melt arrives being used for the shear stress and the time that the melt needs to pass from the mold internal pressure sensor to the mold wall temperature sensor being used for ascertaining the flow rate. A device for carrying out the method comprises in a cavity at least one mold wall temperature sensor arranged on the cavity wall at a distance from an entry of the melt and a pressure sensor which is assigned to the injection nozzle of the injection molding machine and/or a hydraulic system of the injection molding machine and/or a hot runner is assigned a pressure sensor.

EP2485881B1 was first published in 2012 on behalf of Priamus System Technologies AG. It relates to a method for regulating the production of a product in a mold into which a plastic compound subjected to a shear rate and/or a shear stress is introduced. The shear rate and/or the shear stress are changed until the product reaches its desired quality such as in particular surface quality, dimension, strength or the like. The shear rate and/or the shear stress for the product with the desired quality is determined wherein the shear rate and/or the shear stress are ascertained by means of pressure sensors and/or temperature sensors. The shear rate and/or the shear stress after reaching the desired quality are kept constant and positions of pressure sensors and temperature sensors are included in the simulation or determination in order to ascertain optimised values of a shear rate and/or a shear stress automatically between the corresponding sensor positions and to store them in a data base.

US11010816B2 was first published in 2017 on behalf of Imflux Inc. It relates to a method of selecting thermoplastic materials for use with an injection molding apparatus that adjusts viscosity of a thermoplastic material based on an interpreted viscosity that is provided. The method includes determining a target MFI for an identified plastic article based on performance properties. A thermoplastic material supply chain is analyzed and a first thermoplastic material having a first starting MFI and a first MFI range is identified and a second thermoplastic material having a second starting MFI and a second MFI range that is greater than the first MFI range is identified and is priced less than the first thermoplastic material. The second thermoplastic material is purchased.

WO18107274A1 was first published in 2018 on behalf of Husky Injection Molding Systems Ltd. It relates to an injection molding apparatus for producing a flip top closure having a body that includes a base and a lid connected by a hinge. The injection molding apparatus comprises an injection unit, a mold fluidly coupled to the injection unit. The mold defining a mold cavity for producing the flip top closure. A heater is placed adjacent to the hinge defining portion, being configured for heating of at least a portion of the hinge defining portion to a continuous temperature during at least a portion of an injection phase and at least a portion of a subsequent cooling phase of molding of the flip top closure in the mold cavity.

US11027470B2 was first published in 2021 on behalf of Coretech Systems Co Ltd. It relates to a molding system which includes a molding machine having a screw and a driving motor driving the screw to move a molding resin. A mold disposed on the molding machine and connected to the barrel of the molding machine to receive the molding resin is having a mold cavity with a die swell structure for being filled with the molding resin. It further includes a processing module simulating a filling process of the molding resin from the barrel into the molding cavity based on a molding condition, including a predetermined screw speed for the molding machine. A controller is operably communicating with the molding machine to control the driving motor of the molding machine based on the molding conditions to move the screw at the predetermined screw speed to transfer the molding resin at a corresponding flow rate to perform an actual molding process for preparing the injection-molded article.

WO21141928A1 was first published in 2021 on behalf of Imflux Inc. It relates to a method and a system for adjusting melt pressure in an injection molding material that allows calculating a melt pressure of a molten plastic material to be injected and based on the calculated melt pressure and a desired melt pressure adjusting operation of an injection molding machine. A method of controlling melt flow front pressure in a co-injection molding apparatus, the method comprising: during a first injection molding cycle, injecting a first material into a mold cavity at a first injection pressure. During the first injection molding cycle, injecting a second material into the mold cavity at a second injection pressure. Determining a first flow front pressure, the first flow front pressure corresponding to the first material. Determining a second flow front pressure, the second flow front pressure corresponding to the second material. During the first injection molding cycle, adjusting the first injection pressure based on comparing the first flow front pressure to a first optimal flow front pressure. During the first injection molding cycle, adjusting the second injection pressure based on comparing the second flow front pressure to a second optimal flow front pressure.

US20080134765A1 relates to a micro-rheometer for measuring flow characteristics such as viscosity, elasticity, and flow rate of a sample liquid combines well defined micro-fabricated flow channels having geometry changes forming a constriction region therein to a monolithically fabricated pressure sensor arrays. The pressure sensor array positions pressure sensors to measure the viscosity of the sample liquid while flowing in a uniform length of the flow passage and to measure the extensional viscosity while flowing through the constriction region of the passage.

US4624132A relates to a method of determination of extensional viscosity and elasticity of a molten polymer or other fluid comprises making pressure measurements on flows of the fluid through an apparatus which includes a fluid delivery system communicating with an open ended die, the cavity of the die being shaped so as to include a converging portion and a diverging portion. The diverging and converging portions intercommunicate with each other through a die cavity portion of uniform cross section
US20180231445A1 relates to a measuring nozzle for determining the extensional viscosity of polymer melts during their processing, comprising a flow channel which has a rectangular cross-section and which has a transitional section between an inlet section and an outlet section with respective constant cross-section, which transitional section tapers hyperbolically in the flow direction between two mutually opposite channel walls. In order to provide advantageous measuring conditions it is proposed that the transitional section comprises an inlet-side zone in which the mutual distance of the two channel walls between the two hyperbolic channel walls decreases continuously in the direction of flow, and an outlet-side zone which adjoins the inlet-side zone and in which two of the channel walls disposed opposite one another in pairs extend parallel to one another, while the two channel walls arranged therebetween converge hyperbolically in the flow direction.

US20180254198A1 relates to a mold comprising: a first surface to be in contact with a surface of a substrate to be processed; a cavity portion that recedes in a first direction in which the cavity portion is away from the first surface, a resin material being introduced into the cavity portion; a vent portion that recedes in the first direction and that is closer to the first surface than the cavity portion, the vent portion that communicates with the cavity portion and that serves as a discharge path for gas inside the cavity portion; a suction portion that recedes in the first direction and that is farther from the first surface than the vent portion, the suction portion communicating with the vent portion; a first opening/closing portion provided between the vent portion and the suction portion to open and close or narrow down the discharge path; and a second opening/closing portion provided between the first opening/closing portion and the suction portion to open and close the discharge path

US2011254183A1 relates to a measuring device for an injection molding system for ascertaining a batch-specific characteristic number of a plasticized plastic includes a flow channel which is situated between a plasticizing unit of an injection molding machine and an injection molding tool, a first pressure sensor and a second pressure sensor and a first temperature sensor and a second temperature sensor being situated along the flow channel. The flow channel has a taper between the first pressure sensor and the second pressure sensor.

US4425790A relates to an apparatus and a method for predicting the extrusion performance of a thermoplastic resinous polymer. The apparatus includes first, second, and third capillaries in series having substantially the same ratio of passageway length to cross-sectional area, each successive capillary having a larger passageway than that of the immediately preceding capillary; means for forcing the polymer to flow through the first, second, and third capillaries in series at a substantially constant volumetric rate; and means for sensing the pressure drop across the first, second, and third capillaries.

### SUMMARY OF THE INVENTION

The concept of adjusting viscosity of melted plastic material during injection molding to resolve things like balance issues associated with material lot-to-lot MFI (Mold Flow Index) variation using sensors arranged in a cavity is familiar. With the increasing popularity of bioplastic materials, i.e. materials based on bio-degradable materials and/or materials which are based on natural resources, assurance of constant quality becomes more and more important due to variation in material properties and MFI especially with product fulfilling technical functions. During testing of PolyLactic Acid (PLA) applicant found a correlation between viscosity of melted plastic material during injection molding and mechanical properties of the molded parts produced thereby. One aspect of the disclosure is directed to control, respectively improve the mechanical properties such as tensile strength and/or ductility of injection molded parts made from recycled materials and/or bioplastics by adjusting viscosity of the material during the injection molding process. However, especially with recycled materials the mechanical properties are not necessarily solely related to MFI variations, but also related to inclusions of contamination of various types of materials that occurs during the recycling process that potentially also changes the chemical composition of the recycled material.

To calculate shear stress in an appropriate manner, usually two sensors arranged in a cavity are needed. The distance between the sensors is used to calculate the speed of the flow rate, in particular the speed is calculated by dividing the distance between the sensory by a time between two specific signals of the two sensors originating from a melt front in the cavity. The difference of the pressure can be detected when the melt front hits the second sensor. The controller observes the shear stress between two cycles. An absolute value for the shear stress is usually not calculated.

As a result, the controller calculates the target barrel temperature for the next cycle. To calculate shear rate of a material during injection a first and a second sensor are arranged functionally interconnected to a cavity. They are usually interconnected to a controller which establishes a functional connection between them to determine the relevant parameters. With respect to a flow path of the liquefied plastic material in a cavity during injection, the second sensor is preferably arranged downstream with respect to the first sensor. An injection nozzle, which discharges into the cavity is usually arranged upstream with respect to the first sensor. For the calculation, usually the functionally significant height of the cavity channel and the distance between the two sensors are considered. The height of the cavity can be understood as a diameter of the cavity in a direction perpendicular to the general direction of the melt flow. Especially in the case of protrusions and/or indentations of a cavity wall, the functionally significant height as input of the necessary calculations is often difficult to determine. Additional quality relevant factors are compression and shear thinning of the melted plastic material. The compression in the final stage of the material injection shall compensate the shrinkage within the holding pressure phase to keep the pressure level at a given level inside the cavity. An input for the cavity is the maximum pressure value of the measurement values in one cycle, compared to the pressure value behind the global maximum. Shear thinning due to increased shear at a constrictions of the cavity should be avoided, as they can lead to degradation of mechanical properties, such as tensile strength or fatigue resistance. Therefore, an optimal viscosity is to be maintained during production, in particular a target viscosity specific to the plastic material and the geometry of the constriction. Viscosity is usually defined as the sheer stress divided by the shear rate.

Processing of the above mentioned bio-materials is often difficult due to volatile material properties in a single batch during production which may result to defective goods if not accounted for. One important aspect is to avoid defective goods especially in case they have to sustain mechanical stress as it occurs with film hinges and the like. In an injection mold often an area which forms in a final product a constriction, e.g. in the form of a film hinge, is a limiting factor. The constriction is usually arranged transversal to a flow path of the material and may therefore disturb the equal distribution of the material during injection. The constriction is often designed as the limiting factor for processing the material or - in case of a test mold - similar to the limiting factor in a production mold. If it can be made sure that in the final product ejected from the injection mold, the mechanical properties of the material in the area of the constriction are sufficiently within certain boundaries it can be assured that the also the rest of the product fulfills the specifications.

An injection molding device according to the disclosure usually comprises an injection mold (mold) with a first mold half and a second mold half which during operation are displaceable with respect to each other in a first direction between a closed position and an open position. The first mold half and the second mold half are forming in the closed position a at least one cavity there between suitable to receive melted plastic material to form after curing a part corresponding to the cavity therein. The cavity usually comprises a first cavity section and a second cavity section which is interconnected to the first cavity section by a constriction. An injection nozzle is in fluid communication with the first cavity section. In the closed position melted plastic material is injected by the injection nozzle into the first cavity section. From there the melted plastic material flows via the constriction into the second cavity section until the cavity is completely filled with the plastic material. After injection in the holding pressure phase the shrinkage of the material is adjusted by adjusting pressure. An injection molding device according to the disclosure can be foreseen for the production of final products or for the production of test products which are having a different shape then the final product, but which are similar to the product with respect to at least one critical area. The test products can be used to e.g. test mechanical properties independent of the final products. In particular, the test mold can be used to determine a set of operating parameters for a specific material, which can be used in an injection molding device to produce molded parts from that specific material having certain mechanical properties.

To control and calculate the relevant parameters as mentioned above, a first sensor arrangement is arranged in a cavity wall of the first cavity section before the constriction. It is communicating with the first cavity section to determine temperature and/or pressure therein and/or position of the melted plastic material while injecting. A second sensor arrangement is arranged - with respect to the flow path of the material - downstream in a cavity wall of the second cavity section behind the constriction. It is communicating with the second cavity section to determine temperature and/or pressure therein and/or position of the melted plastic material while injecting. The first sensor arrangement and the second sensor arrangement are preferably interlinked to a controller configured to determine during injection the viscosity and/or other parameters as mentioned of the melted plastic material in the area of the constriction. Depending on the field of application, the controller is configured to determine the viscosity as a relative value. Thereby it becomes possible to determine the change of the relative viscosity between two injection cycles, in particular between two consecutive cycles, however, the change in viscosity can also be determined between every nth, eg. 10th cycle or even between average values of a certain number of cycles. Good results can be achieved when the first sensor arrangement and the second sensor arrangement comprise a temperature sensor and/or a pressure sensor respectively, such that the viscosity is determined in relation to the temperature and/or the pressure before and after the constriction. In a preferred variation, the controller is configured to maintain the viscosity within a predetermined range of temperature and/or pressure in relation to the geometry of the constriction. Especially when processing biomaterials as mentioned above, the controller is preferably configured to maintain the viscosity depending on the specific plastic material injected, such that a magnitude of an adjustment of the operation is adapted to the specific plastic material, in particular to biologically based and/or recycled plastic materials. The first and the second sensor arrangement are preferably arranged in a symmetric manner with respect to the design of the constriction, especially in lateral direction. Good results can be achieved when the first and the second sensor arrangement are arranged in the middle with respect to the lateral extension of the cavity (with respect to the general direction of the flow).

Especially when forming hinges made from a thin film of plastic material (film hinges), the constriction usually comprises at least one additional thin spot extending transversal with respect to a flow path of the melted plastic material. The thin spot defining a specific hinge axis in the injection molded material after curing. In certain arrangements more than one transversally arranged thin spot can be arranged behind each other to be passed by the material sequentially. The least one thin spot may cause a critical area during processing of the material. One aim of the disclosure is to offer the possibility to control material conditions in the constriction, respectively the additional thin spot as when the conditions do not fit within a defined, material related range of parameters, the resulting film hinges may become brittle or have an insufficient life time. Therefore, the present disclosure offers the possibility to control the critical parameters in an efficient manner. The thin spot forming the film hinge usually spans across the total width of the constriction being arranged traversal with respect to the flow path of the material. Depending on the field of application, the first sensor arrangement usually comprises at least one temperature sensor and/or at least one pressure sensor and the second sensor arrangement comprises at least one temperature sensor and/or at least one pressure sensor. Good results are possible when the first sensor arrangement and the second sensor arrangement are arranged spaced apart a certain distance along a flow path of the melted plastic material between the first and the second sensor arrangement, wherein the distance is e.g. in the range of three to five times the overall length of the constriction in flow direction. A minimal diameter of the cavity is typically a height of the constriction, in particular a height of the thin spot, preferably implemented as a minimal spacing between the first and the second mold halves along the flow path between the first and the second sensor arrangement. The minimal diameter can be less than 5 mm, in particular less than 1mm, preferably between 0.5 mm and 0.1 mm.Injection molds for the production of hinged products, e.g. such as closures for commercial products or the like, the first and the second cavity section are often interconnected to each other by more than one constriction. These often comprise a first and a second outer hinge strap laterally spaced apart from each other and with respect to a center axis. To obtain a snap effect, the outer hinge straps often comprise two thin spots arranged behind each other and transversal to the flow path of the melted plastic material. Furthermore, an inner hinge strap is arranged on the center axis usually comprising a thin spot arranged transversal to the flow path of the melted plastic material. Depending on the field of application and the intended use, the inner hinge strap or the outer hinge straps can be avoided. In a preferred configuration, one of the outer constrictions may comprise with respect to the flow path of the melted plastic material a first sensor arrangement before the constriction and a second sensor arrangement after the constriction. Alternatively or in addition the inner hinge strap may comprise with respect to the flow path of the melted plastic material a first sensor arrangement before the constriction and a second sensor arrangement after the constriction. Good and balanced results can be achieved when the injection nozzle is arranged on the center axis (axis of symmetry if present). Depending on the design the first sensor arrangement and the second sensor arrangement can e.g. be arranged between 30% to 70% of the lateral width of the respective constriction, in particular 50% (the middle) of the lateral width of the respective constriction. Good results can be achieved, when the first sensor arrangement and the second sensor arrangement are arranged spaced apart a by a distance along the flow path of the melted plastic material, wherein the distance a is in the range of two to five times of a functional length of the constriction. The functional length can be defined as the average length of the channel in which the thin spot is arranged.

Depending on the field of application, the first sensor arrangement and the second sensor arrangement are independently arrangable with respect to the at least one constriction. In particular, the first sensor arrangement and the second sensor arrangement can be arranged spaced apart by a distance less than two to five times of the functional length of the constriction along the flow path of the melted plastic material. If appropriate, the first sensor arrangement or the second sensor arrangement is arranged in a cavity wall adjacent to or at the constriction. In some variations, both sensor arrangements can be arranged adjacent to or at the constriction, in particular in a parallel manner with respect to a flow path of the melted plastic material. When the second sensor arrangement is arranged at the constriction or adjacent thereto, the first sensor arrangement is preferably arranged a certain distance apart from the constriction, said distance is in particular greater than a diameter of a sensor tip of the first sensor arrangement. Alternatively or in addition, when the first sensor arrangement is arranged at the constriction or adjacent thereto, the second sensor arrangement is preferably arranged a certain distance apart from the constriction, said distance is in particular greater than a diameter of a sensor tip of the second sensor arrangement. The distances of the first sensor arrangement and/or the second sensor arrangement from the constriction can in principle be selected independently from each other.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description given herein below and the accompanying drawings which should not be considered limiting to the invention described in the appended claims. The drawings are showing:
- Fig. 1: a first injection mold;
- Fig. 2: a second injection mold;
- Fig. 3: a top view of the first injection mold according to Figure 1;
- Fig. 4: a section view along section line FF according to Figure 3;
- Fig. 5: in a top view an arrangement of sensors with respect to a cavity of a hinged product.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

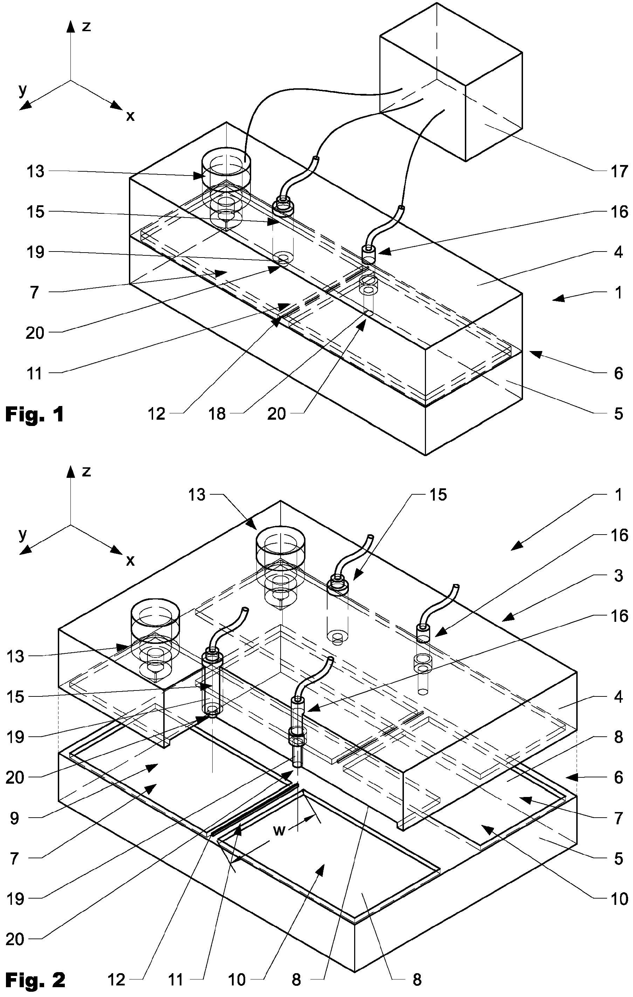

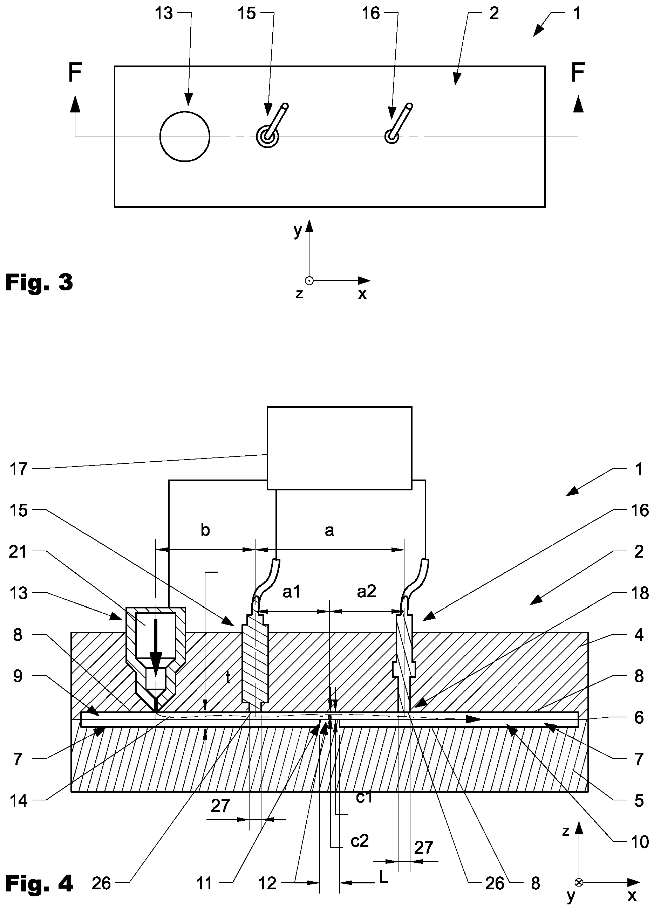

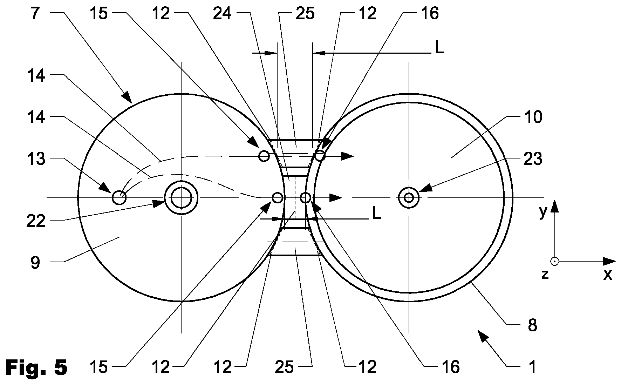

**Figure 1** shows an injection molding device 1 with a first injection mold 2 comprising a single cavity 6. **Figure 2** shows an injection molding device 1 with a second injection mold 3 comprising more than one cavity 7. **Figure 3** shows the first injection mold 2 in a top view and **Figure 4** shows a section view of the first injection mold 2 according to section line FF in **Figure 3****.** Figure 5 is schematically showing an arrangement of sensors with respect to a cavity 7 of a hinged product.

An injection molding device 1 usually comprises at least one first injection mold 2 and/or at least one second injection mold 3. Each of the first and/or second injection mold 2, 3 comprises a first mold half 4 and a second mold half 5 which during operation are arranged displaceable with respect to each other in a first direction (z-direction) between a closed position and an open position. The closed position is shown in an exemplary manner in **Figure** 1 in accordance with the first injection mold 2 where the first and the second mold halves 4, 5 meet each other along a separation plane 6. The open position is shown in an exemplary manner in **Figure 2** in accordance with the second injection mold 3. The first and the second mold half 4, 5 are space apart from each other in the first direction (z-direction). In addition, the first mold half 4 is partially cut in the front area to provide better visibility. As best visible in accordance with **Figure 1** and **Figure 4****,** where the first injection mold 2 is shown in the closed position, the first mold half 4 and the second mold half 5 are forming in the closed position at least one cavity 7 there between suitable to receive melted plastic material (not shown in detail) by an injection nozzle 13 opening into the cavity 7. After curing the plastic material forms a part which corresponds to the contour of the cavity 7 and which can be removed after opening the respective injection mold 2, 3. The at least one cavity 7 comprises a first cavity section 9 and a second cavity section 10 interconnected to the first cavity section 9 by a constriction 11. During operation melted plastic material is injected in the closed position of the first, respectively the second injection mold 2, 3 by the respective injection nozzle 13 into the first cavity section 9. From there the material flows across the constriction 11 into the second cavity section 10 until the whole cavity is completely filled. In the shown variations, a first sensor arrangement 15 is arranged in a cavity wall 8 of to the first cavity section 9 and a second sensor arrangement 10 is arranged in a cavity wall 8 of the second cavity section 10. As indicated in **Figure 1** and **Figure 4****,** the first sensor arrangement 15 and the second sensor arrangement 16 are interlinked to a controller 17 which is configured to determine during injection e.g. the viscosity of the melted plastic material in the area of the constriction 11. Usually the controller 17 is configured to determine the viscosity of material passing the constriction 11 as a relative value of the geometry of the constriction. In a preferred variation, the controller 17 is configured to determine the change of the relative viscosity between two injection cycles. In a preferred variation, the first sensor arrangement 15 and the second sensor arrangement 16 each comprise a temperature sensor 18 and/or a pressure sensor 19. To obtain stable quality during production, the controller 17 can be configured to maintain the viscosity within a predetermined range of temperature and pressure in relation to the geometry of the constriction 10. The controller 17 can be configured to maintain the viscosity depending on the specific plastic material injected, such that a magnitude of an adjustment of the operation is adapted to the specific plastic material, in particular to biological and/or recycled plastic materials. As visible e.g. in **Figure 4** the constriction 10 may comprise at least one additional thin spot 11 further narrowing the cross section and extending essentially transversal with respect to a primary flow path 14 of the melted plastic material 21 injected by the injection nozzle 13. The primary flow path 14 is usually the flow path of the material which first travels across the constriction. The constriction 10 may e.g. comprise at least one geometry for forming a film hinge in the product made from the plastic material received in the cavity 7. In this case, the geometry is implemented as the at least one thin spot 11 spans a total width of the constriction transversal with respect to the flow path 14. The front face 20 of the first and/or the second sensor arrangement 15, 16 may form during operation part of the contour of the cavity wall 8. The first sensor arrangement 15 and the second sensor arrangement 16 are arranged spaced apart by a distance a along the flow path 14 of the melted plastic material 21. The first sensor arrangement 15 is with respect to the primary flow path 14 arranged by a distance a1 upstream the constriction 11 and the second sensor arrangement 16 is arranged by a distance a2 downstream with respect to the constriction 11. The first distance a is preferably in the range of two to five times of the operative length L of the constriction 11, 24, 25.As can be seen from **Figure 4****,** each sensor arrangement 15, 16 comprises a sensor tip 26. Preferably each sensor tip 26 is embedded in the cavity wall 8. Each sensor tip 26 has a diameter 27, in particular the diameter 27 is measured in the direction of the flow path 14. The distances a1 and a2 can be selected independently from each other and a good control of the viscosity is possible for distances a1 and a2, when their sum is greater than the diameters 27 of the sensor tips 26. If appropriate, the distances a1 and/or a2 can be selected, such that the first sensor arrangement 15 and/or the second sensor arrangement 16 is arranged in a cavity wall 8 adjacent to or at the constriction 11. In other words, the distances a1 and a2 can be essentially zero. When the second sensor arrangement 16 is arranged in the cavity wall 8 at the constriction 11, the first sensor arrangement 15 is preferably arranged a certain distance a1 apart from the constriction 11, said distance a1 is in particular greater than a diameter 27 of a sensor tip 16 of the first sensor arrangement 15. Alternatively or in addition, when the first sensor arrangement 15 is arranged in the cavity wall 8 at the constriction 11, the second sensor arrangement 16 is preferably arranged a certain distance a2 apart from the constriction 11, said distance a2 is in particular greater than a diameter 27 of a sensor tip 26 of the second sensor arrangement 16.

Depending on the field of application the setup may vary. In a preferred variation, the first injection mold 4 is e.g. a test mold with one cavity 7 which is foreseen to produce test samples by which it is possible to determine relevant mechanical parameters of the material in relation to the molding conditions, namely the viscosity determined during injection molding. The second injection mold 5 can be a production mold having at least one cavity 7 which is shaped different then the cavity of the first injection mold 4, but having transferable properties with respect to the critical areas, namely the constriction 10, respectively the thin spot 12, e.g. when forming film hinges. Depending on the field of application, the second injection mold 5 can avoid sensors on the inside and rely on the results of the first injection mold 2 only.

**Figure 5** schematically shows a top view of a cavity 7 of a hinged product. The first and the second cavity section 9, 10 are interconnected to each other by constrictions 11, 24, 25 in the form of a first and a second outer hinge strap (25) laterally spaced apart from each other and a center axis (x) comprising two thin spots 11 arranged behind each other and transversal to the flow path 14 of the melted plastic material. Furthermore, an inner hinge strap 24 is arranged on the center axis (x) comprising a thin spot 11 arranged transversal to the flow path 14 of the melted plastic material. Depending on the field of application and the intended use, the inner hinge strap 24 or the outer hinge straps 25 can be avoided. In the present configuration, one of the outer constrictions 25 comprises with respect to the flow path 14 of the melted plastic material 21 a first sensor arrangement 15 before the constriction 25 and a second sensor arrangement 16 after the constriction 25. Alternatively or in addition the inner hinge strap 24 comprises with respect to the flow path 14 of the melted plastic material 21 a first sensor arrangement 15 before the constriction 24 and a second sensor arrangement 16 after the constriction 24. Good and balanced results can be achieved when the injection nozzle 13 is arranged on the center axis x. Depending on the design the first sensor arrangement 15 and the second sensor arrangement 16 can e.g. be arranged between 30% to 70% of the lateral width of the respective constriction 11, 24, 25, in particular 50% of the lateral width of the respective constriction 11, 24, 25. Good results can be achieved, when the first sensor arrangement 15 and the second sensor arrangement 16 are arranged spaced apart a by a distance a along the flow path 14 of the melted plastic material, wherein the distance a is in the range of two to five times of a functional length L of the constriction 11. The functional length L can be defined as the length of the channel in which the thin spot 12 is arranged.

Rather, the words used in the specification are words of description rather than limitation, and it is understood that various changes may be made without departing from the scope of the invention defined in the appended claims.

### LIST OF DESIGNATIONS

| | | | |
|---|---|---|---|
| 1 | Injection molding device | 17 | Controller (sensor arrangements) |
| 2 | First injection mold | | |
| 3 | Second injection mold | 18 | Temperature sensor |
| 4 | First mold half | 19 | Pressure sensor |
| 5 | Second mold half | 20 | Front face (sensor arrangement) |
| 6 | Separation plane | | |
| 7 | Cavity | 21 | Melted plastic material (flow path) |
| 8 | Cavity wall | | |
| 9 | First cavity section | 22 | Orifice |
| 10 | Second cavity section | 23 | Pin |
| 11 | Constriction | 24 | Inner hinge strap (constriction) |
| 12 | Thins spot (constriction) | | |
| 13 | Injection nozzle | 25 | Outer hinge strap (constriction) |
| 14 | Flow path (Melted plastic material) | | |
| | | 26 | Sensor Tip |
| 15 | First sensor arrangement | 27 | Diameter (sensor tip) |
| 16 | Second sensor arrangement | | |

## Claims

1. Injection molding device (1) comprising
a. at least one injection mold (2, 3) with a first mold half (4) and a second mold half (5) during operation being displaceable with respect to each other in a first direction (z) between a closed position and an open position;
b. the first mold half (4) and the second mold half (5) forming in the closed position at least one cavity (7) there between suitable to receive melted plastic material to form after curing a part corresponding to the cavity (7) therein;
c. the at least one cavity (7) comprising a first cavity section (9) and a second cavity section (10) interconnected to the first cavity section (9) by at least one constriction (11, 24, 25);
d. an injection nozzle (13) opening into the first cavity section (9) in the closed position for injection of melted plastic material (21) into the first cavity section (9)**,** the melted plastic material travels from there via the at least one constriction (11, 24, 25) into the second cavity section (10);
e. wherein a first sensor arrangement (15) is arranged in a cavity wall (8) of to the first cavity section (9) and a second sensor arrangement (16) is arranged in a cavity wall (8) of the second cavity section (10) for controlling material conditions in the constriction (11, 24, 25).

2. The injection molding device (1) according to claim 1, **wherein** the first sensor arrangement (15) and the second sensor arrangement (16) are interlinked to a controller (17) configured to determine during injection the viscosity of the melted plastic material in the area of the constriction (11).

3. The injection molding device (1) according to claim 2, **wherein** the controller (17) is configured to determine the viscosity as a relative value of the geometry of the constriction (10, 11).

4. The injection molding device (1) according to claim 3, **wherein** the controller (17) is configured to determine the change of the relative viscosity between two injection cycles.

5. The injection molding device (1) according to at least one of the previous claims, **wherein** the first sensor arrangement (15) and the second sensor arrangement (16) each comprise a temperature sensor (18) and/or a pressure sensor (19).

6. The injection molding device (1) according to at least one of the previous claims 2 to 5, **wherein** the controller (17) is configured to maintain the viscosity within a predetermined range of temperature and pressure in relation to a geometry of the constriction (10, 11).

7. The injection molding device (1) according to at least one of the previous claims 2 to 6, **wherein** the controller (17) is configured to maintain the viscosity depending on the specific plastic material injected, such that a magnitude of an adjustment of the operation is adapted to the specific plastic material, in particular to biological and/or recycled plastic materials.

8. The injection molding device (1) according to at least one of the preceding claims, **wherein** the constriction (10) comprises at least one thin spot (11, 24, 25) extending transversal with respect to a flow path (14) of the melted plastic material.

9. The injection molding device (1) according to claim 8, **wherein** the constriction (10) comprises at least one geometry (11) for forming a film hinge in the plastic material received in the cavity (7), in particular the geometry is implemented as the at least one thin spot (11) spanning a total width w of the constriction (10) traversal with respect to the flow path (14).

10. The injection molding device (1) according to claim 8 or claim 9, **wherein** the constriction (24, 25) comprises at least two thin spots (11) arranged transversal to and in flow patch (14) direction behind each other.

11. The injection molding device (1) according to claim **10, wherein** the first cavity section (9) and the second cavity section (10) are interconnected to each other by constrictions (24, 25) in the form of
a. a first and a second outer hinge strap (25) laterally spaced apart from each other and a center axis (x) comprising two thin spots (11) arranged behind each other and transversal to the flow path (14) of the melted plastic material
and/or
b. an inner hinge strap (24) arranged on the center axis (x) comprising at least one thin spot (11) arranged transversal to the flow path (14) of the melted plastic material.

12. The injection molding device (1) according to claim 1 1, **wherein** at least one of the constrictions (11, 24, 25) comprises with respect to the flow path (14) of the melted plastic material a first sensor arrangement (15) before the constriction (11, 24, 25) and a second sensor arrangement (16) after the constriction (11, 24, 25).

13. The injection molding device (1) according to claim 11 or claim 12, **wherein** the injection nozzle (13) is arranged on the center axis (x).

14. The injection molding device according to at least one of the preceding claims, **wherein** the first sensor arrangement (15) and the second sensor arrangement (16) are arranged between 30% to 70% of the lateral width of the respective constriction (11, 24, 25), in particular 50% of the lateral width of the respective constriction (11, 24, 25).

15. The injection molding device according to at least one of the preceding claims, **wherein** the front face (20) of the first and/or the second sensor arrangement (15, 16) at least partially during operation forms part of a cavity wall (8) of the cavity (7).

16. The injection molding device (1) according to at least one of the preceding claims, **wherein** the first sensor arrangement (15) and the second sensor arrangement (16) are arranged spaced apart by a distance (a) along the flow path (14) of the melted plastic material, wherein the distance (a) is in the range of two to five times of a functional length L of the constriction (11).

17. The injection molding device (1) according to at least one of the preceding claims, **wherein** at least one injection mold (2, 3) forming part of the injection molding device (1) is a production mold or a test mold.

18. The injection molding device (1) according to at least one of the preceding claims, **wherein** the first sensor arrangement (15) and/or the second sensor arrangement (16) is arranged in a cavity wall (8) adjacent to or at the constriction (11, 24, 25).

19. **The** injection molding device (1) according to claim 18, **wherein**
a. the first sensor arrangement (15) is arranged a certain distance (a1) apart from the constriction (11, 24, 25), said distance (a1) is preferably greater than a diameter (27) of a sensor tip (26) of the first sensor arrangement (15); and/or
b. the second sensor arrangement (15) is arranged a certain distance (a2) apart from the constriction (11, 24, 25), said distance (a2) is preferably greater than a diameter (27) of a sensor tip (26) of the second sensor arrangement (15).

20. A method for adjusting operation of an injection molding device (1) such that at least one mechanical property of the produced plastic part is within a predefined range, the method comprising the steps of:
a. providing an injection molding device (1) according to at least one of the preceding claims.
b. determining a viscosity of the melted plastic material (21) during injection based on signals of the first and the second sensor arrangement (15, 16) and a geometry of the cavity (7) at least partially defined by at least one geometric parameter of the constriction (11);
c. adjusting the viscosity based on predetermined reference data defining a target viscosity range for producing plastic parts with the at least one mechanical property in the desired range.

21. Method according to claim 20, **wherein** the predetermined reference data is ascertained for the geometry of the cavity (7) and/or a specific plastic material by associating viscosity measurements to measurements of the at least one mechanical property of the produced plastic part in the desired range.

## Patentansprüche

1. Spritzgiessvorrichtung (1) mit
a. mindestens einer Spritzgiessform (2, 3) mit einer ersten Formhälfte (4) und einer zweiten Formhälfte (5), die im Betrieb in einer ersten Richtung (z) zwischen einer geschlossenen Position und einer offenen Position relativ zueinander verschiebbar sind;
b. die erste Formhälfte (4) und die zweite Formhälfte (5) bilden in der geschlossenen Position mindestens einen zwischen ihnen befindlichen Hohlraum (7) aus, der zur Aufnahme von geschmolzenem Kunststoffmaterial geeignet ist, um nach dem Aushärten ein dem Hohlraum (7) entsprechendes Teil darin zu bilden;
c. der mindestens eine Hohlraum (7) umfasst einen ersten Hohlraumabschnitt (9) und einen zweiten Hohlraumabschnitt (10), die durch mindestens eine Verengung (11, 24, 25) mit dem ersten Hohlraumabschnitt (9) verbunden sind;
d. eine in der geschlossenen Position in den ersten Hohlraumabschnitt (9) mündende Einspritzdüse (13) zum Einspritzen von geschmolzenem Kunststoffmaterial (21) in den ersten Hohlraumabschnitt (9), wobei das geschmolzene Kunststoffmaterial von dort über die mindestens eine Verengung (11, 24, 25) in den zweiten Hohlraumabschnitt (10) gelangt;
e. wobei eine erste Sensoranordnung (15) in einer Hohlraumwand (8) des ersten Hohlraumabschnitts (9) und eine zweite Sensoranordnung (16) in einer Hohlraumwand (8) des zweiten Hohlraumabschnitts (10) zur Überwachung der Materialbedingungen in der Verengung (11, 24, 25) angeordnet ist.

2. Spritzgiessvorrichtung (1) nach Anspruch 1, **wobei** die erste Sensoranordnung (15) und die zweite Sensoranordnung (16) mit einer Steuerung (17) verbunden sind, die so konfiguriert ist, während des Einspritzens die Viskosität des geschmolzenen Kunststoffmaterials im Bereich der Verengung (11) zu bestimmt.

3. Spritzgiessvorrichtung (1) nach Anspruch 2, **wobei** die Steuereinrichtung (17) dazu ausgelegt ist, die Viskosität als relativen Wert der Geometrie der Verengung (10, 11) zu bestimmen.

4. Spritzgiessvorrichtung (1) nach Anspruch 3, **wobei** die Steuereinrichtung (17) dazu ausgelegt ist, die Änderung der relativen Viskosität zwischen zwei Spritzzyklen zu bestimmen.

5. Spritzgiessvorrichtung (1) nach mindestens einem der vorstehenden Ansprüche, **wobei** die erste Sensoranordnung (15) und die zweite Sensoranordnung (16) jeweils einen Temperatursensor (18) und/oder einen Drucksensor (19) umfassen.

6. Spritzgiessvorrichtung (1) nach mindestens einem der vorstehenden Ansprüche 2 bis 5, **wobei** die Steuereinrichtung (17) dazu ausgelegt ist, die Viskosität in Abhängigkeit von einer Geometrie der Verengung (10, 11) in einem vorgegebenen Temperatur- und Druckbereich zu halten.

7. Spritzgiessvorrichtung (1) nach mindestens einem der vorstehenden Ansprüche 2 bis 6, **wobei** die Steuereinrichtung (17) dazu ausgelegt ist, die Viskosität in Abhängigkeit von dem eingespritzten spezifischen Kunststoff so zu halten, dass ein Ausmaß einer Anpassung des Betriebs an den spezifischen Kunststoff, insbesondere an biologische und/oder recycelte Kunststoffe, angepasst ist.

8. Spritzgiessvorrichtung (1) nach mindestens einem der vorstehenden Ansprüche, **wobei** die Verengung (10) mindestens eine dünne Stelle (11, 24, 25) umfasst, die sich quer zu einem Strömungsweg (14) des geschmolzenen Kunststoffmaterials erstreckt.

9. Spritzgiessvorrichtung (1) nach Anspruch 8, **wobei** die Verengung (10) mindestens eine Geometrie (11) zum Ausbilden eines Filmscharniers in dem in dem Hohlraum (7) aufgenommenen Kunststoff aufweist, wobei die Geometrie insbesondere als die mindestens eine dünne Stelle (11) ausgebildet ist, die über eine Gesamtbreite w der Verengung (10) quer zu dem Strömungsweg (14) übergreifend ausgebildet ist.

10. Spritzgiessvorrichtung (1) nach Anspruch 8 oder 9, **wobei** die Verengung (24, 25) mindestens zwei dünne Stellen (11) umfasst, die quer und in Strömungsfleckrichtung (14) hintereinander angeordnet sind.

11. Spritzgiessvorrichtung (1) nach Anspruch 10, **dadurch gekennzeichnet, dass** der erste Hohlraumabschnitt (9) und der zweite Hohlraumabschnitt (10) durch Verengungen (24, 25) in Form von
a. einem ersten und einem zweiten äußeren Scharnierband (25), die seitlich voneinander beabstandet sind und eine Mittelachse (x) aufweisen, die zwei dünne Stellen (11) umfasst, die hintereinander und quer zum Fließweg (14) des geschmolzenen Kunststoffmaterials angeordnet sind
und/oder
einem inneren Scharnierband (24), das auf der Mittelachse (x) angeordnet ist und mindestens eine dünne Stelle (11) aufweist, die quer zum Strömungsweg (14) des geschmolzenen Kunststoffmaterials angeordnet ist.

12. Spritzgiessvorrichtung (1) nach Anspruch 11, **wobei** mindestens eine der Verengungen (11, 24, 25) in Bezug auf den Strömungsweg (14) des geschmolzenen Kunststoffmaterials eine erste Sensoranordnung (15) vor der Verengung (11, 24, 25) und eine zweite Sensoranordnung (16) nach der Verengung (11, 24, 25) umfasst.

13. Spritzgiessvorrichtung (1) nach Anspruch 11 oder Anspruch 12, **wobei** die Einspritzdüse (13) entlang der Mittelachse (x) angeordnet ist.

14. Spritzgiessvorrichtung nach mindestens einem der vorstehenden Ansprüche, **wobei** die erste Sensoranordnung (15) und die zweite Sensoranordnung (16) zwischen 30 % und 70 % der seitlichen Breite der jeweiligen Verengung (11, 24, 25), insbesondere bei 50 % der seitlichen Breite der jeweiligen Verengung (11, 24, 25), angeordnet sind.

15. Spritzgiessvorrichtung nach mindestens einem der vorstehenden Ansprüche, **wobei** die Stirnseite (20) der ersten und/oder der zweiten Sensoranordnung (15, 16) im Betrieb zumindest teilweise Teil einer Hohlraumwand (8) des Hohlraums (7) bildet.

16. Spritzgiessvorrichtung (1) nach mindestens einem der vorstehenden Ansprüche, **wobei** die erste Sensoranordnung (15) und die zweite Sensoranordnung (16) entlang des Strömungsweges (14) des geschmolzenen Kunststoffmaterials um einen Abstand (a) voneinander beabstandet angeordnet sind, wobei der Abstand (a) im Bereich des Zwei- bis Fünffachen einer wirksamen Länge L der Verengung (11) liegt.

17. Spritzgiessvorrichtung (1) nach mindestens einem der vorstehenden Ansprüche, **wobei** mindestens eine die Spritzgiessvorrichtung (1) bildende Spritzgiessform (2, 3) eine Serienform oder eine Testform ist.

18. Spritzgiessvorrichtung (1) nach mindestens einem der vorstehenden Ansprüche, **wobei** die erste Sensoranordnung (15) und/oder die zweite Sensoranordnung (16) in einer Hohlraumwand (8) benachbart zu oder an der Verengung (11, 24, 25) angeordnet ist.

19. Spritzgiessvorrichtung (1) nach Anspruch 18, **wobei**
a. die erste Sensoranordnung (15) in einem bestimmten Abstand (a1) von der Verengung (11, 24, 25) angeordnet ist, wobei der Abstand (a1) vorzugsweise größer ist als ein Durchmesser (27) einer Sensorspitze (26) der ersten Sensoranordnung (15); und/oder
b. die zweite Sensoranordnung (15) in einem bestimmten Abstand (a2) von der Verengung (11, 24, 25) angeordnet ist, wobei der Abstand (a2) vorzugsweise größer ist als ein Durchmesser (27) einer Sensorspitze (26) der zweiten Sensoranordnung (15).

20. Verfahren zum Einstellen des Betriebs einer Spritzgiessvorrichtung (1) derart, dass mindestens eine mechanische Eigenschaft des hergestellten Kunststoffteils innerhalb eines vordefinierten Bereichs liegt, wobei das Verfahren die folgenden Schritte umfasst:
a. Bereitstellen einer Spritzgiessvorrichtung (1) gemäß mindestens einem der vorstehenden Ansprüche.
b. Bestimmen einer Viskosität des geschmolzenen Kunststoffmaterials (21) während des Einspritzens auf der Grundlage von Signalen der ersten und der zweiten Sensoranordnung (15, 16) und einer Geometrie des Hohlraums (7), die zumindest teilweise durch mindestens einen geometrischen Parameter der Verengung (11) definiert ist;
c. Anpassen der Viskosität auf der Grundlage vorbestimmter Referenzdaten, die einen Soll-Viskositätsbereich für die Herstellung von Kunststoffteilen mit der mindestens einen mechanischen Eigenschaft im gewünschten Bereich definieren.

21. Verfahren nach Anspruch 20, **wobei** die vorgegebenen Referenzdaten für die Geometrie des Hohlraums (7) und/oder einen bestimmten Kunststoff durch Zuordnung von Viskositätsmessungen zu Messungen der mindestens einen mechanischen Eigenschaft des hergestellten Kunststoffteils im gewünschten Bereich ermittelt werden.

## Revendications

1. Dispositif de moulage par injection (1) comprenant
a. au moins un moule d'injection (2, 3) avec une première moitié de moule (4) et une deuxième moitié de moule (5) pouvant, pendant le fonctionnement, être déplacées l'une par rapport à l'autre dans une première direction (z) entre une position fermée et une position ouverte ;
b. la première moitié de moule (4) et la deuxième moitié de moule (5) formant, en position fermée, au moins une cavité (7) entre elles, adaptée pour recevoir de la matière plastique fondue afin de former, après durcissement, une pièce correspondant à la cavité (7) dans celle-ci ;
c. la au moins une cavité (7) comprenant une première section de cavité (9) et une deuxième section de cavité (10) reliées entre elles à la première section de cavité (9) par au moins un rétrécissement (11, 24, 25) ;
d. une buse d'injection (13) s'ouvrant dans la première section de cavité (9) en position fermée pour l'injection de matière plastique fondue (21) dans la première section de cavité (9), la matière plastique fondue se déplaçant de là via au moins une constriction (11, 24, 25) dans la deuxième section de cavité (10) ;
e. dans lequel un premier dispositif capteur (15) est disposé dans une paroi de cavité (8) de la première section de cavité (9) et un deuxième dispositif capteur (16) est disposé dans une paroi de cavité (8) de la deuxième section de cavité (10) pour contrôler les conditions de matière dans le rétrécissement (11, 24, 25).

2. Dispositif de moulage par injection (1) selon la revendication 1, **dans lequel** le premier agencement de capteurs (15) et le deuxième agencement de capteurs (16) sont reliés à un dispositif de commande (17) configuré pour déterminer pendant l'injection la viscosité de la matière plastique fondue dans la zone de la constriction (11).

3. Dispositif de moulage par injection (1) selon la revendication 2, **dans lequel** le dispositif de commande (17) est configuré pour déterminer la viscosité en tant que valeur relative de la géométrie de la constriction (10, 11).

4. Dispositif de moulage par injection (1) selon la revendication 3, **dans lequel** le dispositif de commande (17) est configuré pour déterminer la variation de la viscosité relative entre deux cycles d'injection.

5. Dispositif de moulage par injection (1) selon au moins l'une des revendications précédentes, **dans** lequel le premier agencement de capteurs (15) et le deuxième agencement de capteurs (16) comprennent chacun un capteur de température (18) et/ou un capteur de pression (19).

6. Dispositif de moulage par injection (1) selon au moins l'une des revendications précédentes 2 à 5, **dans** lequel le contrôleur (17) est configuré pour maintenir la viscosité dans une plage prédéterminée de température et de pression en fonction d'une géométrie de la constriction (10, 11).

7. Dispositif de moulage par injection (1) selon au moins l'une des revendications précédentes 2 à 6, **dans** lequel le contrôleur (17) est configuré pour maintenir la viscosité en fonction du matériau plastique spécifique injecté, de telle sorte qu'une amplitude d'un ajustement du fonctionnement soit adaptée au matériau plastique spécifique, en particulier à des matériaux plastiques biologiques et/ou recyclés.

8. Dispositif de moulage par injection (1) selon au moins l'une des revendications précédentes, **dans lequel** la constriction (10) comprend au moins un point mince (11, 24, 25) s'étendant transversalement par rapport à un chemin d'écoulement (14) de la matière plastique fondue.

9. Dispositif de moulage par injection (1) selon la revendication 8, **dans lequel** la constriction (10) comprend au moins une géométrie (11) pour former une charnière en film dans la matière plastique reçue dans la cavité (7), en particulier la géométrie est réalisée sous la forme d'au moins un point mince (11) s'étendant sur une largeur totale w de la constriction (10) transversalement par rapport au chemin d'écoulement (14).

10. Dispositif de moulage par injection (1) selon la revendication 8 ou 9, **dans lequel** le rétrécissement (24, 25) comprend au moins deux points minces (11) disposés transversalement à la direction de la zone d'écoulement (14) et l'un derrière l'autre.

11. Dispositif de moulage par injection (1) selon la revendication 10, **dans lequel** la première section de cavité (9) et la deuxième section de cavité (10) sont reliées entre elles par des rétrécissements (24, 25) sous la forme
a. a première et une deuxième languette de charnière extérieure (25) espacées latéralement l'une de l'autre et d'un axe central (x) comprenant deux points minces (11) disposés l'un derrière l'autre et transversalement au trajet d'écoulement (14) de la matière plastique fondue
et/ou
b. une languette de charnière intérieure (24) disposée sur l'axe central (x) et comprenant au moins un point mince (11) disposé transversalement au trajet d'écoulement (14) de la matière plastique fondue.

12. Dispositif de moulage par injection (1) selon la revendication 11, **dans lequel** au moins l'un des rétrécissements (11, 24, 25) comprend, par rapport au trajet d'écoulement (14) de la matière plastique fondue, un premier agencement de capteurs (15) avant le rétrécissement (11, 24, 25) et un deuxième agencement de capteurs (16) après le rétrécissement (11, 24, 25).

13. Dispositif de moulage par injection (1) selon la revendication 11 ou 12, **dans lequel** la buse d'injection (13) est disposée sur l'axe central (x).

14. Dispositif de moulage par injection selon au moins l'une des revendications précédentes, **dans lequel** le premier agencement de capteurs (15) et le deuxième agencement de capteurs (16) sont disposés entre 30 % et 70 % de la largeur latérale du rétrécissement respectif (11, 24, 25), en particulier 50 % de la largeur latérale du rétrécissement respectif (11, 24, 25).

15. Dispositif de moulage par injection selon au moins l'une des revendications précédentes, **dans lequel** la face avant (20) du premier et/ou du deuxième agencement de capteurs (15, 16) forme au moins partiellement, pendant le fonctionnement, une partie d'une paroi de cavité (8) de la cavité (7).

16. Dispositif de moulage par injection (1) selon au moins l'une des revendications précédentes, **dans lequel** le premier dispositif capteur (15) et le deuxième dispositif capteur (16) sont disposés à une distance (a) l'un de l'autre le long du trajet d'écoulement (14) de la matière plastique fondue, la distance (a) étant comprise entre deux et cinq fois la longueur fonctionnelle L du rétrécissement (11).

17. Dispositif de moulage par injection (1) selon au moins l'une des revendications précédentes, **dans lequel** au moins un moule d'injection (2, 3) faisant partie du dispositif de moulage par injection (1) est un moule de production ou un moule d'essai.

18. Dispositif de moulage par injection (1) selon au moins l'une des revendications précédentes, **dans lequel** le premier agencement de capteurs (15) et/ou le deuxième agencement de capteurs (16) est disposé dans une paroi de cavité (8) adjacente à la constriction (11, 24, 25) ou au niveau de celle-ci.

19. Dispositif de moulage par injection (1) selon la revendication 18, **dans lequel**
a. le premier agencement de capteurs (15) est disposé à une certaine distance (a1) de la constriction (11, 24, 25), ladite distance (a1) étant de préférence supérieure à un diamètre (27) d'une pointe de capteur (26) du premier agencement de capteurs (15) ; et/ou
b. le deuxième agencement de capteurs (15) est disposé à une certaine distance (a2) de la constriction (11, 24, 25), ladite distance (a2) étant de préférence supérieure à un diamètre (27) d'une pointe de capteur (26) du deuxième agencement de capteurs (15).

20. Procédé pour régler le fonctionnement d'un dispositif de moulage par injection (1) de telle sorte qu'au moins une propriété mécanique de la pièce en plastique produite se situe dans une plage prédéfinie, le procédé comprenant les étapes suivantes :
a. fournir un dispositif de moulage par injection (1) selon au moins l'une des revendications précédentes.
b. déterminer une viscosité du matériau plastique fondu (21) pendant l'injection sur la base de signaux du premier et du deuxième agencement de capteurs (15, 16) et d'une géométrie de la cavité (7) définie au moins partiellement par au moins un paramètre géométrique du rétrécissement (11) ;
c. ajuster la viscosité sur la base de données de référence prédéterminées définissant une plage de viscosité cible pour produire des pièces en plastique avec la au moins une propriété mécanique dans la plage souhaitée.

21. Procédé selon la revendication 20, **dans lequel** les données de référence prédéterminées sont déterminées pour la géométrie de la cavité (7) et/ou une matière plastique spécifique en associant des mesures de viscosité à des mesures de la au moins une propriété mécanique de la pièce en matière plastique produite dans la plage souhaitée.
